# EUROPÄISCHE PATENTSCHRIFT

(11) **EP 0 514 809 B1**
(45) Veröffentlichungstag und Bekanntmachung des Hinweises auf die Patenterteilung: **09.10.1996**
(21) Anmeldenummer: 92108347.3
(22) Anmeldetag: 18.05.1992
(51) Int. Cl.: B65G 47/26, B65G 19/20

(54) **Förderanlage für als Stückgut ausgebildetes Fördergut**
Conveyor installation for material in the form of articles
Installation de transport pour charges sous la forme d'articles

(30) Priorität: 23.05.1991 CH 1530/91; 17.01.1992 CH 130/92
(43) Veröffentlichungstag der Anmeldung: 25.11.1992
(73) Patentinhaber: Manitec Consulting AG, CH-6032 Emmen (CH)
(72) Erfinder: Koller, Hans, CH-6048 Horw (CH)
(74) Vertreter: Fillinger, Peter, Dr.

(56) Entgegenhaltungen:
- DE-A- 1 939 654
- DE-A- 2 505 451
- NL-A- 7 511 141
- US-A- 3 791 510

## Beschreibung

Die vorliegende Erfindung bezieht sich auf eine Förder- und Staustrecke gemäss dem Oberbegriff des Anspruchs 1.

Eine solche Förder- und Staustrecke ist aus der NL-A-7511141 bekannt. Bei dieser Förder- und Staustrecke besteht der endlose Förderstrang aus einer Plattenkette, in der die verdickten Bereiche durch mehrere aufeinander folgende höhere Platten gebildet sind. Die vorangehende Schmalseite des verdickten Bereichs ist so gerundet, dass sie unter einem vergleichsweise grossen Winkel auf das Fördergut auftrifft, an diesem vorwiegend formschlüssig angreift und es ruckartig in Bewegung setzt. Erreicht das Fördergut die Staustrecke, schiebt sich der verdickte Bereich wiederum unter einer ruckartigen Beanspruchung des Förderstranges unter dem aufgestauten Fördergut hindurch. Der im Prinzip gleiche Nachteil ergibt sich bei der Förder- und Staustrecke gemäss der US-A-3791510. Grundsätzlich wird bei dieser Strecke das Fördergut auf einer Rollenbahn transportiert, deren Rollen von einem in der Rollenmitte versenkten Gurtband angetrieben sind. Auf der Rollenbahn festsitzendes Fördergut wird von am Gurtband vorgesehenen verdickten Bereichen ebenfalls überwiegend formschlüssig mitgenommen, weil die in Laufrichtung geneigten Flächen der verdickten Bereiche nach unten ebenfalls zunehmend steiler werden, was ein ruckartiges Mitnehmen des Fördergutes bewirkt.

Die vorliegende Erfindung stellt sich daher die Aufgabe, eine Förder- und Staustrecke der eingangs genannten Art derart zu verbessern, dass die verdickten Bereiche beim Auftreffen auf das Fördergut dieses im wesentlichen ruckfrei mitnehmen.

Erfindungsgemäss wird diese Aufgabe gelöst durch die kennzeichnenden Merkmale des Anspruchs 1.

Durch die Erfindung wird die Förderstrecke vergleichsweise leicht und flach, das heisst, sie kann mit geringer Höhe gebaut werden. Dies ermöglicht in einer Lagerhalle gegebener Höhe eine Vielzahl von Förder- und Staustrecken übereinander anzuordnen, ohne dass dabei viel Platz für eine gute Zugänglichkeit im Wartungs- und Reparaturfall vorzusehen ist.

Die vorliegende Erfindung und ihre Ausführungsformen erlauben weiter, aufgrund einfacher und kostengünstiger Massnahmen einen Gurtförderer unter Vermeidung der Nachteile einer hohen Zugkraft bzw. eines hohen Staudrucks als Stauförderer einzusetzen und nach Bedarf zusätzlich mit einer Vereinzelungsfunktion zu versehen.

Ausführungsbeispiele der erfindungsgemässen Förderanlage werden nachstehend anhand der Zeichnungen erläutert. Es zeigen:
Fig. 1 eine schematische Ansicht in Förderrichtung einer ersten Förderanlage, deren Fördergurt auf seiner Unterseite mit Verdickungen versehen ist;
Fig. 2 einen schematischen Längsschnitt eines Teils der Förderanlage der Fig. 1;
Fig. 3 eine perspektivische Ansicht eines Teils einer zweiten Förderanlage, deren Fördergurt auf seiner Oberseite mit Verdickungen versehen ist;
Fig. 4 einen schematischen Längsschnitt einer dritten Förderanlage, deren Fördergurt auf seiner Oberseite mit Verdickungen unterschiedlicher Höhe versehen ist;
Fig. 5 einen Schnitt längs der Linie V-V in Fig. 4;
Fig. 6 eine schematische Darstellung der Wirkung der Förderanlage der Fig. 4 und 5 und
Fig. 7 ein zweites Ausführungsbeispiel der Förderanlage.

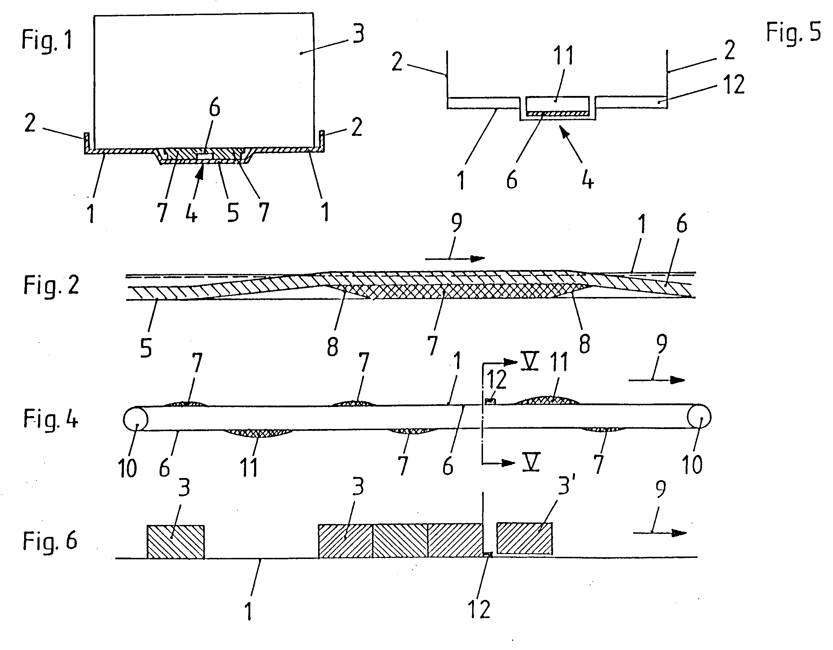

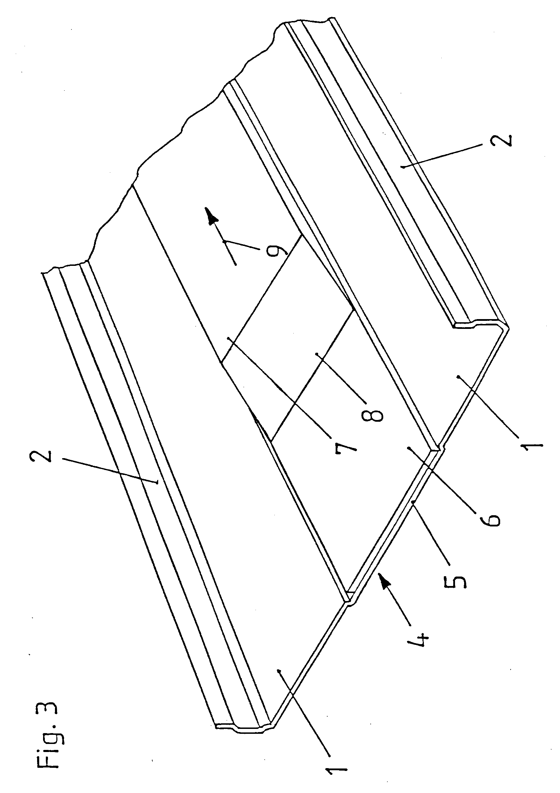

Die in Fig. 1 in Ansicht in Förderrichtung und in Fig. 2 in einem Längsschnitt schematisch dargestellte Förderanlage weist eine Auflagebahn 1 mit seitlichen Führungsrändern 2 für das hier schachtelförmige Stückgut 3 auf. Das Stückgut 3 kann somit längs der als obere Tragfläche und "Abstellfläche" wirkenden Auflagebahn 1 gleiten. Die Auflagebahn 1 ist durch einen mittig angeordneten, sich nach unten erstreckenden Kanal 4 unterbrochen, der einen Boden 5 hat und der Aufnahme eines Fördergurtes 6 dient. Der Kanalboden 5 bildet somit eine Gleitfläche für den Fördergurt 6 bzw. eine untere Tragfläche. Der Fördergurt 6 ist in seiner Längsrichtung abschnittsweise mit Verdickungen 7 versehen, die sich von der Unterseite des Fördergurts 6 aus zum Boden 5 hin erstrecken und verdickte Bereiche bilden. In Fig. 2 ist nur eine von normalerweise mehreren Verdickungen 7 des Fördergurtes 6 dargestellt, die je einen verdickten Bereich bilden. Jede Verdickung 7 bildet an ihren beiden Enden gegenüber der Unterseite des Fördergurtes 6 eine geneigte Fläche 8 unter einem sehr spitzen Winkel. Mit einem Pfeil 9 ist in Fig. 2 die Laufrichtung des Fördergurtes 6 und damit die Förderrichtung bezeichnet.

Wie insbesondere aus Fig. 2 ersichtlich ist, liegt normalerweise die Unterseite des Fördergurtes 6 auf dem Boden 5 des Kanals 4 auf, so dass sich die Oberseite des Fördergurtes 6 unterhalb der Auflagebahn 1 befindet bzw. das auf der Auflagebahn 1 abgestützte Stückgut 3 nicht berührt. In den verdickten Bereichen des Fördergurtes 6, welche mit der unteren Verdickung 7 versehen sind, liegt diese Verdickung auf dem Boden 5 des Kanals 4 auf, so dass der Fördergurt 6 über das Niveau der Auflagebahn 1 angehoben wird. Dadurch tritt einerseits zwischen der Verdickung 7 und dem Boden 5 und andererseits zwischen der Oberseite des Fördergurtes 6 und der Unterseite des Stückgutes 3 Reibung auf, wodurch das Stückgut in der Laufrichtung 9 mitgenommen wird. Nur dann, wenn eine derartige Verdickung 7 als Mitnehmer unter das Stückgut 3 zu liegen kommt, entsteht ein zunehmender Reibschluss und wird das Stückgut mitgenommen. Dies bewirkt, dass in der dargestellten Förderanlage der Fördergurt 6 nur noch rund 5 bis 10 % der sonst bei Bandförderern üblichen Zugkraft benötigt. In gleichem Ausmass reduziert sich demnach der Staudruck auf das Stückgut, wenn dieses durch einen sogenannten Stauer zurückgehalten wird.

Die beschriebene Verdickung 7 des Fördergurtes 6 kann sich auch auf dessen Oberseite befinden, wie dies in Fig. 3 perspektivisch dargestellt ist. Diese Förderanlage weist wiederum die Auflagebahn 1 mit den Seitenrändern 2 für das nicht dargestellte Stückgut auf. Mittig ist ebenfalls der Kanal 4 mit dem Boden 5 für den Fördergurt 6 ausgebildet, dessen Oberseite unterhalb der Auflagebahn 1 liegt. In mindestens einem verdickten Bereich des Fördergurtes 6 ist dieser an seiner Oberseite mit der Verdickung 7 versehen, die an ihren beiden Enden wiederum mit geneigten Flächen 8 ausgebildet ist und die bei Auflage der Unterseite des Fördergurtes 6 auf dem Boden 5 des Kanals 4 über die Auflagebahn 1 vorsteht. Somit gelangt bei einer Bewegung des Fördergurtes 6 in der Laufrichtung 9 die Oberseite der Verdickung 7 in Reibungsverbindung mit dem auf der Auflagebahn 1 befindlichen Stückgut und nimmt dieses wie beim Ausführungsbeispiel der Fig. 2 mit.

Die Länge der angebrachten Verdickungen 7 des Fördergurtes 6 richtet sich bei beiden Ausführungsbeispielen nach der Art der Förderaufgabe sowie nach den Abmessungen des Fördergutes. Bei richtiger Dimensionierung und richtigem Gurtmaterial wird jeweils nur das das vorderste Stück des Fördergutes gefördert.

Da nur in den verdickten Bereichen mit den als Mitnehmer bestimmten Verdickungen 7 des Fördergurtes 6 das Fördergut transportiert wird, kann die erfindungsgemässe Förderanlage auch zum Vereinzeln des Fördergutes ausgebildet und eingesetzt werden, wie dies nachstehend anhand der Fig. 4 bis 6 erläutert wird.

In Fig. 4 ist der ganze, über Umlenkrollen 10 geführte Fördergurt 6 dargestellt. Der Fördergurt 6 liegt gemäss Fig. 5 wiederum in einem zwischen den von den Seitenrändern 2 begrenzten Auflagebahnen 1 für das Fördergut befindlichen Kanal 4.

Der Fördergurt 6 ist, hier an seiner Oberseite, wiederum mit den Verdickungen 7 sowie mit weiteren Verdickungen 11 versehen. Die Verdickungen 7 und 11 haben unterschiedliche Höhen: Während die niedrigeren Verdickungen 7 wie bei den vorgängigen Ausführungsbeispielen bewirken, dass eine Reibungsverbindung zwischen dem Fördergurt 6 und dem über der Verdickung 7 befindlichen Stückgut entsteht, bewirken die höheren Verdickungen 11 ein eigentliches Anheben des Stückgutes.

Gemäss den Fig. 4 und 5 ist nun die Auflagebahn 1 mit einem Anschlag 12 für das Fördergut versehen, Dieser Anschlag 12 ist über der Auflagebahn 1 höher als die niedrigeren Verdickungen 7, jedoch weniger hoch als die höheren Verdickungen 11.

Die Wirkung dieser Ausbildung ist in Fig. 6 veranschaulicht. Vor dem Anschlag 12 wird alles Stückgut 3 in der bereits beschriebenen Art durch die Verdickungen 7 aufgestaut. Sobald eine höhere Verdickung 11 unter das am Anschlag 12 befindliche Stückgut gelangt, wird dieses angehoben und über den Anschlag 12 hinaus getragen, so dass durch den Anschlag 12 eine Vereinzelung des Stückgutes 3' entsprechend der Sequenz der höheren Verdickungen 11 erfolgt Somit kann mit der dargestellten Ausbildung der Förderanlage unregelmässig anfallendes Stückgut aufgestaut und nachher in gesteuerter Folge wieder abgegeben und weitergefördert werden, ohne dass ein Regeleingriff erfolgen muss. Durch eine zusätzliche Variation der Gurtgeschwindigkeit kann die Vereinzelungs-Sequenz gesteuert werden.

Eine beispielsweise Einsatzmöglichkeit der beschriebenen Stau- und Vereinzelungseinrichtungen mittels eines Fördergurtes ist die folgende:

Aus einer Fabrikation fallen in unregelmässigen Abständen Behälter mit verschiedenen Teilen, z.B. aus mehreren Spritzguss-Maschinen, an. Diese sollen nun in einer Sortieranlage wieder "artgleich" zusammengeführt werden. Dazu müssen die Behälter gepuffert und in Abständen an den Sortierer weitergegeben werden, wozu die erfindungsgemässe Förderanlage von Vorteil ist.

Bei den gezeigten Ausführungsbeispielen für den aus biegsamem Gurtband gebildeten endlosen Strang 6 können die Verdickungen 7 aus Leder, vorzugsweise aus Chromleder bestehen. Auch Bürstenteppiche eignen sich, um die Verdickungen 7 zu bilden.

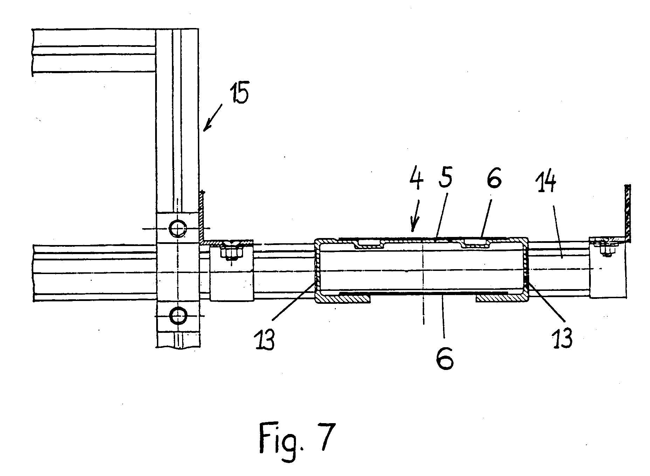

Fig. 7 zeigt einen Querschnitt durch ein zweites Ausführungsbeispiel einer Förderanlage. Der Kanal 5 zur Aufnahme des Fördergurtes 6, der für dessen fördernden Trum eine Gleitfläche sowie eine seitliche Führung bildet, ist in den Steg eines U-Profils eingeformt. Dessen abgewinkelte Schenkel 13 führen den rücklaufenden Trum des Fördergurtes 6 seitlich, wobei die abgewinkelten Enden gleichzeitig als Stütze wirken.

Der Kanal 4, wie auch die Umlenkrollen des Fördergurtes 6 sind an horizontalen Kragarmen 4 gelagert, deren eines Ende an einer Stütze, Säule 15 oder dgl. fest eingespannt ist. Dabei ist das freie Ende der Kragarme 14 derart gestaltet, dass der Fördergurt 6 von der Seite (in Richtung des Pfeiles) über die Umlenkwalzen bzw. in den Kanal 4 geschoben werden kann. Im Reparaturfall kann der Fördergurt 6 mühelos in umgekehrter Richtung entnommen und ausgewechselt werden.

## Patentansprüche

1. Förder- und Staustrecke für als Stückgut ausgebildetes Fördergut (3) mit zwei seitlichen Stützflächen (1) für das Fördergut (3) und einer dazwischen angeordneten, versenkten Führungsfläche (5), auf der der eine Trum eines endlosen Förderstranges (6) aufliegt, der mindestens einen über die Stützflächen (1) vorstehenden verdickten Bereich aufweist, der mit einer in Laufrichtung (9) geneigten Fläche das Fördergut (3) auf den Stützflächen (1) gleitend mitnimmt, dadurch gekennzeichnet, dass der Förderstrang (6) ein Gurtband und der verdickte Bereich durch eine am Gurtband angebrachte Verdickung (7) erzeugt ist, dass die in Laufrichtung (9) geneigte Fläche des verdickten Bereichs durchwegs einen so spitzen Neigungswinkel aufweist, dass sich der verdickte Bereich unter das Fördergut (3) schieben und dieses durch Reibung mitnehmen kann.

2. Förder- und Staustrecke nach Anspruch 1, dadurch gekennzeichnet, dass der verdickte Bereich durch eine Verdickung (7) aus Chromleder erzeugt ist.

3. Förder- und Staustrecke nach Anspruch 1, dadurch gekennzeichnet, dass der verdickte Bereich durch eine Verdickung (7) aus einem Bürstenteppichbesatz erzeugt ist.

4. Förder- und Staustrecke nach Anspruch 1, dadurch gekennzeichnet, dass die Stützflächen (1) und die Führungsfläche (5) aus Blechprofilen gebildete Gleitflächen sind.

5. Förder- und Staustrecke nach Anspruch 4, dadurch gekennzeichnet, dass die Stützflächen (1) und die Führungsfläche (5) einstückig mit im wesentlichen U-förmigem Querschnittprofil gefertigt sind, und dass die Führungsfläche (5) versenkt im Quersteg des Querschnittprofils angeordnet ist.

6. Förder- und Staustrecke nach Anspruch 5, dadurch gekennzeichnet, dass die Schenkel (13) des U-förmigen Querschnittprofils gegeneinander abgewinkelt sind.

7. Förder- und Staustrecke nach einem der Ansprüche 1 bis 6, dadurch gekennzeichnet, dass der verdickte Bereich des Gurtbandes (6) durch eine auf seiner von den Stützflächen (1) abgewandten Unterseite angebrachten, auf der Führungsfläche (5) aufliegenden Verdickung (7) gebildet ist.

8. Förder- und Staustrecke nach einem der Ansprüche 1 bis 7, dadurch gekennzeichnet, dass die Stützflächen (1) für das Fördergut (3) mit einem Anschlag (12) versehen sind, und dass mehrere verdickte Bereiche vorhanden sind, wovon mindestens einer höher als die Höhe des Anschlags der Auflagebahn (1) ist.

## Claims

1. Conveying and stowing line for conveying items (3) in the form of piece-goods, comprising two lateral support surfaces (1) for the conveying items (3) and thereinbetween a lower guide surface (5) on which is seated the one portion of a continuous conveyer section (6) which has at least one thickened area which protrudes over the support surfaces (1) and which glidingly carries along the conveying item (3) on the support surfaces with a surface of the conveying item (3) which is slanted in the movement direction (9), **characterised in that** the conveying section (6) is a webbing, and the thickened area is formed by a thickening (7) attached to the webbing, and the surface of the thickened area which is slanted in the movement direction (9) is continuously at an angle which allows the thickened area to move underneath the conveying item (3) which is then pulled along by friction.

2. Conveying and stowing line according to Claim 1, **characterised in that** the thickened area is formed by a thickening (7) of chrome leather.

3. Conveying and stowing line according to Claim 1, **characterised in that** the thickened area is formed by a thickening (7) of a brush-carpet trimming.

4. Conveying and stowing line according to Claim 1, **characterised in that** the support surfaces (1) and the guide surface (5) are gliding surfaces formed of sheet-metal profiles.

5. Conveying and stowing line according to Claim 4, **characterised in that** the support surfaces (1) and the guide surface (5) are made in one piece with essentially U-shaped cross-sectional profile, and the guide surface (5) is sunk into the transverse web of the cross-sectional profile.

6. Conveying and stowing line according to Claim 5, **characterized in that** the shanks (13) of the U-shaped cross-sectional profile are angled relative to each other.

7. Conveying and stowing line according to one of Claims 1 to 6, **characterised in that** that the thickened area of the webbing (6) is formed by a thickening (7), which is attached to the bottom side which is facing away from the support surfaces (1) and seated on the guide surface (5).

8. Conveying and stowing line according to one of Claims 1 to 7, **characterized in that** the support surfaces (1) for the conveying items (3) are provided with a stop (12), and by a plurality of thickened areas of which at least one is higher than the height of the stop of the seating track.

## Revendications

1. Installation de transport et de matières à transporter (3) ayant la forme d'articles individuels, constituée de deux surfaces d'appui (1) latérales encadrant une piste de guidage (5) située plus bas et sur laquelle porte un câble d'une bande transporteuse sans fin (6) présentant au moins une partie épaissie dépassant en hauteur les surfaces d'appui (1) et entraînant avec elle par l'intermédiaire d'une surface en pente dans la direction de déplacement (9), la matière à transporter en la faisant glisser sur les surfaces d'appui (1),
caractérisée en ce que
la bande transporteuse (6) est une courroie, la zone épaissie est obtenue par un renfort d'épaisseur (7) apporté à la courroie, la pente en direction du déplacement (9) de la zone épaissie présentant un angle d'inclinaison tel que la zone épaissie peut s'engager sous la matière à transporter (3) et l'entraîner par frottement.

2. Installation de transport selon la revendication 1,
caractérisée en ce que
la zone épaissie est obtenue par l'intermédiaire d'un renfort d'épaisseur (7) en cuir chromé.

3. Installation de transport selon la revendication 1, ca
ractérisée en ce que
la zone épaissie est obtenue par l'intermédiaire d'un renfort d'épaisseur constitué par un élément de tapis-brosse.

4. Installation de transport selon la revendication 1,
caractérisée en ce que
les surfaces d'appui(1) et la piste de guidage (5) sont des surfaces de glissement constituées par des profilés en tôle.

5. Installation de transport selon la revendication 4,
caractérisée en ce que
les surfaces d'appui (1) et la piste de guidage (5) forment un ensemble monobloc constitué par un profilé dont la section a essentiellement la forme d'un U, la piste de guidage (5) se situant en creux sur la barre transversale du profilé.

6. Installation de transport selon la revendication 5,
caractérisée en ce que
les branches (13) du profilé à section en U sont en pente l'une vers l'autre.

7. Installation de transport selon une des revendications 1 à 6
caractérisée en ce que
la zone épaissie de la courroie (6) est constituée par un renfort d'épaisseur (7) fixé à sa face inférieure tournée vers les surfaces d'appui (1) et reposant sur les surfaces de guidage (5).

8. Installation de transport selon une des revendications 1 à 7,
caractérisée en ce que
les surfaces d'appui (1) des matières à transporter (3) sont munies d'une butée (12), plusieurs zones épaissies étant prévues, dont une au moins dépasse en hauteur la butée placée sur les surfaces d'appui (1).
